# FASCICULE DE BREVET EUROPEEN

(11) **EP 2 077 723 B1**
(45) Date de publication et mention de la délivrance du brevet: **04.08.2010**
(21) Numéro de dépôt: 07858561.9
(22) Date de dépôt: 12.10.2007
(51) Int. Cl.: A01N 63/00

(54) **NOUVEAU PROCEDE DE LUTTE BIOLOGIQUE CONTRE LA PROLIFERATION DE LEGIONELLA PNEUMOPHILA, ET NOUVEL AGENT DESINFECTANT CONTENANT DES PROTOZOAIRES AMIBIENS DU GENRE WILLAERTIA**
NEUES VERFAHREN FÜR DIE BIOLOGISCHE BEKÄMPFUNG DES AUSBREITENS VON LEGIONELLA PNEUMOPHILA, UND NEUES DESINFEKTIONSMITTEL, DAS AMÖBEN-PROTOZOEN DER GATTUNG WILLAERTIA ENTHÄLT
NOVEL METHOD FOR BIOLOGICALLY COMBATING THE PROLIFERATION OF LEGIONELLA PNEUMOPHILA, AND NOVEL DISINFECTING AGENT CONTAINING AMOEBIC PROTOZOA OF THE WILLAERTIA GENUS

(30) Priorité: 12.10.2006 FR 0654222
(43) Date de publication de la demande: 15.07.2009
(73) Titulaire: University Claude Bernard Lyon I, 69622 Villeurbanne Cedex (FR)
(72) Inventeur: BODENNEC, Jacques, F-69600 Oullins (FR); DEY, Rafik, F-69009 Lyon (FR); PERNIN, Pierre, F-69003 Lyon (FR)
(74) Mandataire: Sarlin, Laure V.
(86) Numéro de dépôt international: PCT/FR2007/052131
(87) Numéro de publication internationale: WO 2008/043969

(56) Documents cités:
- MICHEL R ET AL: "Legionella-like slender rods multiplying within a strain of Acanthamoeba sp. isolated from drinking water" PARASITOLOGY RESEARCH, vol. 84, no. 1, janvier 1998 (1998-01), pages 84-88, XP002424648 ISSN: 0932-0113
- "Etudes et retombées dans le champ "environnement et santé"" ECOMICTH INFO, no. 1, 25 septembre 2004 (2004-09-25), pages 1-4, XP002424649 Extrait de l'Internet: URL:http://web.archive.org/web/20040925055 420/http://ecomicth.free.fr/> [extrait le 2007-03-14]

## Description

La présente invention concerne un procédé de lutte biologique contre la prolifération de *Legionella pneumophila,* et constitue donc une méthode originale pour lutter contre la prolifération de la bactérie pathogène.

*Legionella pneumophila* responsable chez l'homme de la légionellose, est une bactérie gram négatif, qui se caractérise par une réplication intracellulaire facultative à l'intérieur des macrophages pulmonaires. La légionellose est une maladie qui a atteint 1200 personnes en France en 2004, causant la mort de 130 malades. Aussi, la surveillance et la prévention de la légionellose constituent une préoccupation de plus en plus importante. Au delà du problème de santé publique, la présence de la bactérie dans les eaux d'installations industrielles impose une surveillance contraignante et d'importantes pertes d'exploitations en cas d'arrêt de ces installations imposées dans le cadre réglementaire.

Dans l'environnement, *L. pneumophila* présente une répartition hydrique ubiquitaire associée à une relative thermophilie, caractéristiques qu'elle partage avec les amibes libres. ROWBOTHAM en 1980 (ROWBOTHAM, T.J. J. Clin. Pathol. (1980) 33 : 1179-1183), par analogie avec ce que l'on observe chez l'homme, a été le premier à supposer et à démontrer l'existence d'une multiplication intracellulaire de *Legionella pneumophila* à l'intérieur de cellules de protozoaires telles que les amibes libres. Depuis, de nombreux essais de cocultures réalisés en milieu liquide ont démontré une prolifération très importante des légionelles en présence d'amibes. D'autres arguments de type indirect, viennent également renforcer l'existence d'interactions entre amibes libres et légionelles. Ainsi, lors des épidémies de légionellose, des légionelles et des amibes libres ont pu être isolées simultanément à partir des eaux mises en cause (BARBAREE et al. Appl. Environ. Microbiol. (1986) 51 : 422-424; BREIMAN et al. JAMA (1990) 263 : 2924-2926). SANDEN et al. dans Environ. Microbiol. (1992) 58 : 2001-2004 indiquent que l'isolement des légionelles à partir de l'eau est fortement amélioré par une simple incubation des échantillons d'eau en présence d'amibes. Enfin, STEINERT *et al.* (STEINERT et al. Appl. Environ. Microbiol. (1997) 63 : 2047-2053) montrent que l'addition d'amibes est même capable de provoquer la reviviscence de souches de légionelles non détectables dans les conditions habituelles car devenues non cultivables, bien que toujours viables (VBNC), en raison d'un séjour trop prolongé dans un milieu appauvri tel que l'eau distillée.

FIELDS (Trends Microbiol. (1996) 4: 286-290) a énuméré 13 espèces d'amibes libres et 2 espèces de ciliés susceptibles d'assurer la multiplication de *L. pneumophila.* Mais en fait, les études réalisées *in vitro* ont porté, dans l'immense majorité des cas, sur seulement trois genres *amibiens : Acanthamoeba* (ANAND et al. J. Hyg. Camb. (1983) 91 : 167-178 ; HOLDEN et al. Neff. Infect. Immun. (1984) 45 : 18-24 ; VANDENESCH et al. Zbl. Bakt. (1990) 272 : 265-275 ; MOFFAT et TOMPKINS Infect. Immun. (1992) 60 : 296-301 ; BOZUE et JOHNSON, Infect. Immun. (1996) 64 : 668-673 ; GAO et al. Infect. Immun. (1997) 65 :4738-4746 ; NEUMEISTER et al. Appl. Environ. Microbiol. (1997) 63 : 1219-1224), *Hartmannella* (KING et al. Infect. Immun. (1991) 59 : 758-763 ; ABU KWAIK, Appl. Environ. Microbiol. (1996) 62 : 2022-2028 ; ABU KWAIK et al. Infect. Immun. (1994) 62 : 1860-1866 et Appl. Environ. Microbiol. (1998) 64 : 3134-3139) et *Naegleria* (NEWSOME, Infect. Immun. (1985) 50 :449-452). Avec ces genres, les légionelles se multiplient en grand nombre à l'intérieur des amibes où elles sont observées à l'intérieur de vacuoles phagocytaires.

De plus, alors que les amibes libres sont suspectées de favoriser le maintien et la multiplication des légionelles en milieu hydrique, notamment au niveau des biofilms, aucune étude n'a jusqu'à présent envisagé les répercussions sur la multiplication des légionelles, des inter-relations complexes qui peuvent exister (phénomènes de compétition, de phagocytose inter-amibienne) entre les différents genres amibiens cohabitant au sein de la microfaune amibienne.

Il est, aujourd'hui, reconnu que les amibes libres jouent le rôle de vecteurs grâce auxquels les légionelles se développent et se propagent dans l'environnement. Les techniques, à ce jour, utilisées pour lutter contre les légionelles font appel à des traitements thermiques, des traitements physiques (rayons UV) ou encore à des traitements chimiques. Néanmoins, ces traitements ne donnent pas entière satisfaction car ils permettent seulement d'éliminer provisoirement les bactéries planctoniques de *L. pneumophila* présentes à l'état libre dans le milieu traité, mais s'avèrent inefficaces vis à vis des bactéries présentes et protégées à l'intérieur des protozoaires.

Dans ce contexte, les inventeurs ont mis en évidence, de façon totalement originale, que certaines souches du genre amibien *Willaertia* stoppent la prolifération des bactéries *L. pneumophila* et que ces souches présentent également un pouvoir phagocytaire vis-à-vis d'autres espèces amibiennes susceptibles d'être elles mêmes infestées par la bactérie.

La présente invention a donc pour objet tout procédé de lutte biologique utilisant des amibes du genre *Willaertia* contre la prolifération des *Legionella pneumophila*. Les procédés conformes à l'invention n'incluent pas les méthodes de traitement appliquées au corps humain ou à l'animal. Dans le procédé selon l'invention, le plus souvent c'est un flux gazeux ou liquide qui est traité avec des protozoaires du genre *Willaertia*, et en particulier avec l'espèce *Willaertia magna.*

Le procédé selon l'invention trouve, en particulier des applications, dans la désinfection des réseaux de distribution d'eaux sanitaires ou d'eaux industrielles, des circuits de refroidissements des installations industrielles, ou des réseaux de climatisation. En particulier, le procédé selon l'invention pourra être mis en oeuvre, par adjonction d'amibes *Willaertia,* pour lutter au sein des biofilms contre la prolifération de *L. pneumophila* dans les canalisations d'eaux, ces biofilms étant un lieu de développement de différentes espèces d'amibes. Les amibes *Willaertia* pourront être directement ajoutées, sous forme d'une suspension de formes végétatives ou de kystes, aux eaux ou liquides circulant dans les canalisations ou réseaux à traiter. Il est également possible d'envisager de les pulvériser en aérosol, par exemple sous la forme d'une suspension de kystes, dans les tours aéro-réfrigérantes et les installations industrielles à désinfecter.

En particulier, l'agent biologique utilisé correspond à une des deux souches amibiennes appartenant à l'espèce *Willaertia magna* déposées à l'ATCC (American Type Culture Collection - Patent Depositary - 10801 University Boulevard - Manassas, VA 20110 - Etats-Unis ) et enregistrées sous les numéros N° PTA-7824 et N° PTA-7825, le 21 août 2006. Ces souches N° PTA-7824 et N° PTA-7825 font partie intégrante de l'invention. Ces souches sont de la famille des Vahlkampfiidae. Elles sont caractérisées par l'expression de pseudopodes lobés, arrondis émis de façon brutale lors du déplacement des individus. Les individus sous forme végétative ont une taille comprise entre 45 à 100 µm et entre 18 à 25 µm pour la forme kyste. Ces kystes sont arrondis, de forme ovoïde ou parfois très déformés et possèdent de 7 à une dizaine de pores dans leur paroi. Le mode de division est la pro-mitose.

De telles amibes, qui présentent une activité particulièrement intéressante, pourront donc être utilisées dans des agents désinfectants, en particulier destinés à l'élimination des bactéries *Legionella pneumophila* et à lutter contre la prolifération et la contamination par légionellose.

Selon un autre de ses aspects, l'invention a pour objet un agent désinfectant contenant des amibes correspondant à la souche déposée sous le numéro PTA-7824 à l'ATCC ou à la souche déposée sous le numéro PTA-7825 à l'ATCC seront préférées. De façon avantageuse, l'agent désinfectant selon l'invention se présente sous la forme d'une solution ou d'une suspension aqueuse, par exemple dans de l'eau distillée. L'agent désinfectant pourra se présenter sous une forme pulvérisable, par exemple en aérosol.

L'activité inhibitrice de ces protozoaires amibiens du genre *Willaertia,* et en particulier de l'espèce *Willaertia magna,* vis-à-vis de *L. pneumophila* a été mise en évidence par les inventeurs en comparant la réplication de la bactérie chez les genres *Acanthamoeba* et *Hartmannella* utilisés en tant que modèles amibiens de référence avec celle observée chez le genre amibien *Willaertia.* De plus, l'existence d'un processus phagocytaire des protozoaires du genre *Willaertia* vis-à-vis d'autres genres amibiens a également été démontrée.

Etant donné le rôle essentiel joué par les amibes libres dans la prolifération et le maintien de *L. pneumophila* dans le milieu extérieur, éléments qui conditionnent l'épidémiologie de la légionellose puisqu'il n'existe pas de transmission interhumaine, le procédé et l'agent désinfectant envisagé selon l'invention présentent de nombreux avantages, en termes de coût, d'efficacité et de respect de l'environnement.

Les exemples ci-après permettent d'illustrer l'invention mais n'ont aucun caractère limitatif.
La **Figure 1** montre les cinétiques comparées du développement de *L. pneumophila* obtenu en coculture avec différents genres amibiens, dont le genre *Willaertia.*
La **Figure 2** montre l'effet de *L. pneumophilla* sur les différentes espèces d'amibes et la résistance particulière de *Willaertia* par rapport aux *Hartmannella* et aux *Acanthamoeba.*
La **Figure 3** montre la résistance de *Willaertia* envers la cytotoxicité induite par *L. pneumophilla*. Noter, au contrainre, l'effet cytotoxique prononcé qui est observé chez *Acanthamoeba*.
La **Figure 4** montre la phagocytose des amibes *Hartmannella* par les amibes *Willaertia* observée en microscopie à contraste de phase sur le vivant (x1200).
La **Figure 5** montre l'évolution spontanée des populations respectives d'amibes *Hartmannella* (H) et *Willaertia* (W) après mise en présence selon un ratio initial H/W aux environs de 15.
La **Figure 6** représente les évolutions respectives des populations d'amibes *Hartmannella* (série " témoin " et " essai ") et *Willaertia* dans les cocultures emboîtées de *L. pneumophila*.
La **Figure 7** représente les cinétiques comparées du développement de *L. pneumophila* en coculture mono-amibienne (*Hartmannella* seules) et en coculture tripartite (*Hartmannella* + *Willaertia*).

### 1. MATERIEL ET METHODES

### 1.1. Souches utilisées :

- *Légionnelles :* la souche utilisée est la souche de *Legionella pneumophila* sérogroupe 1 déposée sous le numéro 107 629T à l'institue Pasteur à Paris (CNCM). Elle est entretenue sur gélose en pente BCYE à raison d'un repiquage toutes les trois semaines. La souche est ensemencée en stries larges sur boîte de gélose BCYE (AES^{®}) et incubée 3 à 4 jours à 37°C avant la réalisation des cocultures de manière à disposer de bactéries en phase post-exponentielle.
- ***Amibes :*** les souches utilisées appartiennent à trois genres amibiens différents :
   ○ *Hartmannella vermiformis,*
   ○ *Acanthamoeba castellanii,*
   ○ *Willaertia magna* (N° PTA-7824).

Ces trois souches sont cultivées axéniquement, en présence de 10% de sérum de veau foetal, sur milieu SCGYEM (voir composition en annexe), réparti en tubes FALCON^{®} (3033) à raison de 3 ml par tube. En entretien, les formes végétatives sont repiquées tous les 8-9 jours. Pour les cocultures, on utilise des repiquages de 3 à 4 jours de manière à disposer de trophozoites en phase de croissance exponentielle.

### - Milieu SCGYEM

Composition :
➢ Caséine (MERCK 1.02244.010) 10 g
➢ Na₂HPO₄ 1,325 g
➢ KH₂PO₄ 0,8 g
➢ Glucose 2,5 g
➢ Extrait de levure (DIFCO 0127-17-9) 5 g
➢ Eau distillée 900 ml
➢ Sérum de veau foetal 100 ml

Aux 900 ml d'eau distillée, on ajoute 2,5 ml de NaOH (1N), puis Na₂HPO₄ et KH₂PO₄. On chauffe légèrement sur plaque chauffante, puis on ajoute progressivement la caséine sous agitation magnétique. Après dissolution de la caséine, on incorpore le glucose et l'extrait de levure.

Après dissolution complète, on filtre successivement sur fibre de verre (SARTORIUS SM 6513400), puis sur membrane de 1µm (WHATMAN 7190 004). Le milieu est ensuite aliquoté en flacons de verre. Les flacons sont stérilisés à l'autoclave 20 minutes à 120°C. Avant l'utilisation définitive et répartition du milieu, on ajoute stérilement sous hotte à flux laminaire le sérum de veau foetal à raison de 10% du volume final.

### 1.2. Coculture monoamibienne de L. pneumophila.

### 1.2.1. Préparation de l'inoculum bactérien :

A partir d'une culture de 3 à 4 jours sur gélose BCYE, on prépare une suspension de *L. pneumophila* dans de l'eau distillée stérile de façon à obtenir 1 unité de Densité Optique à 550nm, soit une concentration de 10⁹ UFC/ml.

### 1.2.2. Réalisation des cocultures mono-amibiennes

Les cocultures sont réalisées dans des tubes pour cultures cellulaires (FALCON^{®} 3033) contenant 3 ml de milieu SCGYEM. L'ensemencement des tubes se fait à raison d'environ 7.10⁴ amibes/ml, à partir d'une suspension amibienne axénique préalablement dénombrée sur cellule de THOMA. L'infestation des amibes par *L. pneumophila* est réalisée en fixant un ratio *L. pneumophila*/*amibe* de 50, donc aux environs de 3,5 10⁶ bactéries/ml. Aussitôt après l'infestation, les tubes de cocultures sont centrifugés à faible vitesse (760g pendant 5 min) pour favoriser le contact entre amibes et bactéries. Après 10 min, les tubes sont remis en suspension manuellement et sont incubés, en position inclinée, à l'étuve à 37°C.

### 1.2.2.1 Etude cinétique des cocultures

Les cocultures sont suivies pendant au moins 5 jours (J0 à J+4) après l'infestation bactérienne. A chaque intervalle de temps, un tube est prélevé et examiné à la fois du point de vue amibien et bactérien après agitation vigoureuse au vortex afin de détacher les amibes des parois. Pour chaque tube examiné :
- La numération des amibes s'effectue directement sur cellule de THOMA ou de MALASSEZ.
- En raison des résultats obtenus à la suite des essais préliminaires de lyse amibienne, le dénombrement des légionelles totales est effectué par étalement direct du milieu de culture sur gélose BCYE (AES^{®}) après dilution de 10 en 10 en eau distillée stérile, dans des microtubes Eppendorf. Chaque dilution est étalée en triplicat sur gélose BCYE à raison de 100µl par boîte. Les boîtes sont alors mises à incuber à 37°C pendant 6 jours au minimum. Une première lecture des étalements s'effectue à partir du 4^{ème} jour en dénombrant les colonies; elle est suivie d'une deuxième lecture au 6^{ème} jour pour confirmation. Le nombre de *L. pneumophila* est exprimé en UFC/ml en tenant compte du facteur de dilution et en supposant que chaque colonie correspond à 1 bactérie initialement présente dans la suspension diluée.

Pour chaque genre amibien, les courbes de croissance de *L. pneumophila,* sont représentées en fonction du temps et correspondent à la moyenne d'au moins trois essais indépendants avec les écarts-types correspondants.

En raison de la lenteur du développement des colonies de *L. pneumophila* en culture sur BCYE, l'obtention de l'ensemble des résultats pour une manipulation de ce type demande un délai d'au moins 11 jours.

### 1.2.2.2 Cytotoxicité de L. pneumophila vis-à-vis des différents genres amibiens

Des cocultures des trois genres amibiens ont également été réalisées dans des microplaques de 24 puits contenant 5.10⁴amibes/puits, infestées avec un ratio *L. pneumophila*/amibe de 50, afin d'observer microscopiquement les monocouches cellulaires et de fournir une évaluation qualitative de l'effet cytopathogène de la bactérie vis-à-vis de l'amibe.

La cytotoxicité a également été déterminée au bout de 48 et de 72 H de coculture par un test d'exclusion au bleu Trypan sur les genres *Acanthamoeba* et *Willaertia.* Les amibes sont récupérées par centrifugation douce du contenu des tubes de cocultures, puis resuspendues dans 200 µl de milieu SCGYEM avant mélange avec le bleu trypan selon un ratio 4/1. Les cellules sont examinées à l'hématimètre et on détermine pour chaque genre amibien le pourcentage de cellules tuées apparaissant colorées en bleu.

### 1.3. Cocultures tripartites de L. pneumophila.

Les répercussions possibles des interactions entre différents genres amibiens, et notamment de la phagocytose inter-amibienne, sur la réplication et la transmission des légionelles ont été étudiées. Dans un premier temps, la cinétique du processus de phagocytose inter-amibienne entre *Hartmannella* et *Willaertia* a été étudiée, puis des cocultures tripartites de *L. pneumophila* mettant en jeu deux hôtes amibiens successifs ont été réalisées.

### 1.3.1. Etude cinétique de la phagocytose inter-amibienne Hartmannella-Willaertia.

A partir des cultures axéniques respectives, on prépare une série de tubes de milieu SCGYEM contenant à la fois des amibes *Hartmannella* et des amibes *Willaertia* selon un ratio fixé aux environs de 20 *Hartmannella* pour 1 *Willaertia.* Le processus phagocytaire est observé microscopiquement *in vivo* en contraste de phase, et, grâce aux différences prononcées de taille et d'aspect entre les deux genres amibiens, son évolution peut être suivie par numération des deux populations amibiennes en présence à différents intervalles de temps.

### 1.3.2. Réalisation des cocultures tripartites de L. pneumophila.

Dans ce but, un protocole expérimental en deux temps a été utilisé :
✔ la première étape correspond, comme dans les cocultures mono-amibiennes, à l'infestation en coculture du premier hôte amibien par *L. pneumophila*.
✔ la deuxième étape consiste, après élimination des légionelles extracellulaires, à introduire dans la coculture un deuxième genre amibien.

### 1.3.2.1. Infestation du premier hôte amibien à J-1 :

Cette étape correspond à l'infestation de l'amibe *H. vermiformis* par *L. pneumophila.* Elle est réalisée en tubes FALCON dans des conditions analogues à celles indiquées précédemment au paragraphe 1.2.2. Les seules différences portent sur la concentration amibienne de départ qui est de l'ordre de 2.10⁵ *Hartmannella*/ml et sur le ratio d'infestation *L. pneumophila* /*Hartmannella* qui est de 20. Les tubes sont incubés en position inclinée pendant 24H à 37°C.

***1.3.2.2. Addition du deuxième hôte amibien à J0.***

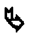 *Elimination des légionelles extracellulaires*

A l'issue du temps d'incubation destiné à assurer l'infestation du premier hôte amibien, les légionelles extracellulaires sont éliminées par traitement des cocultures à la gentamycine à raison de 50µg/ml pendant 1H à 37°C (Moffat, J.F, and Tompkins, L.S. Immun. (1992) 60 : 296-301). Après centrifugation à 2000 g pendant 10min, l'antibiotique est éliminé par décantation du milieu de culture et le culot cellulaire d'*Hartmannella* est lavé à deux reprises avec 2ml de milieu SCGYEM sans sérum pour éliminer toute trace d'antibiotique. Après le dernier lavage, le culot amibien de chaque tube est remis en suspension, par passage au vortex, dans son volume initial de milieu SCGYEM (3ml). On procède à une numération (J0), à la fois des *Hartmannella* et des légionelles.

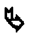 *Inoculation du deuxième hôte amibien (Willaertia)*

Parallèlement, on prépare une suspension amibienne du deuxième hôte *Willaertia* à partir d'une culture axénique. Après dénombrement à la cellule de THOMA, on calcule le volume nécessaire de suspension à introduire dans les tubes de cocultures constituant la série « essai » de façon à obtenir un rapport cellulaire 1^{er} hôte amibien / 2^{ème} hôte amibien (*Hartmannella*/*Willaertia*) voisin de 20. Les tubes correspondant à la série « témoin » sont traités exactement de la même manière, mais ne reçoivent pas d'amibes *Willaertia* après le traitement à la gentamycine.

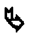 *Suivi des cocultures de J0 à J+5*.

Chaque jour, un tube de coculture de la série « essai » et « témoin », après agitation au vortex, est examiné à la fois du point de vue amibien et bactérien:
- La numération des trophozoites pour chaque genre amibien est effectuée sur cellule de THOMA ou de MALASSEZ.
- Le dénombrement des légionelles totales est effectué comme dans le cas des mono-cocultures par étalement sur gélose BCYE des dilutions du milieu de culture en eau distillée stérile. Une seule manipulation demande donc un délai d'une douzaine de jours pour être interprétée.

*2.RESULTATS*

***2. 1. Résultats des cocultures monoamibienne de L. pneumophila*.**

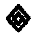 **Absence de croissance de *L. pneumophila* en présence des amibes**

### Willaertia.

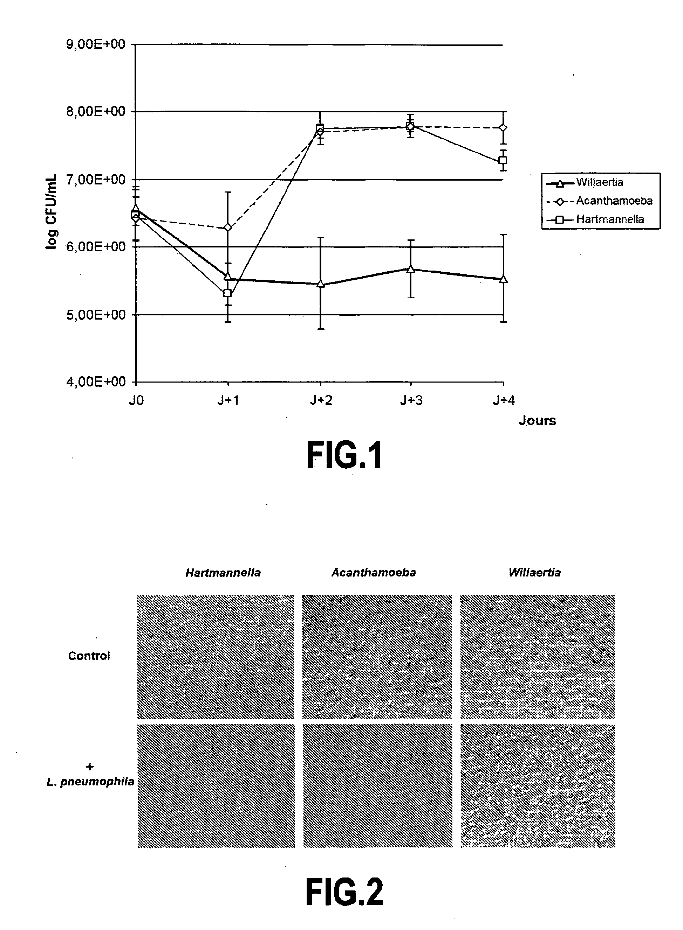

La Figure 1 montre la croissance comparée de *L. pneumophila* en coculture avec les trois genres amibiens, les cocultures étant réalisées comme décrit précédemment dans la section matériel et méthode, à savoir : les amibes axénisées sur milieu SCGYEM sont cocultivées en présence de *L. pneumophila* à partir de J0 selon un ratio d'infestation *L. pneumophila*/amibe de 50. Les résultats correspondent à la moyenne ± écart-type de 6 (*Hartmannella*) *à* 8 (*Acanthamoeba* et *Willaertia*) essais indépendants.

Les cocultures de *L. pneumophila* réalisées en présence d'amibes appartenant aux genres *Hartmannella* et *Acanthamoeba* confirment une nette multiplication de la bactérie en présence de ces deux genres amibiens puisqu'on note une augmentation atteignant respectivement 1,3 et 1,4 log à J+3 **(****Figure 1****).** A l'inverse, alors que les conditions expérimentales sont strictement identiques, les cocultures de *L. pneumophila* en présence d'amibes *Willaertia sp*., non seulement n'aboutissent pas à un développement significatif de la bactérie, mais conduisent même à une diminution de 1 log de la population bactérienne et finalement la différence de développement de *L. pneumophila* entre les cocultures en présence d'*Hartmannella sp.* ou d'*Acanthamoeba sp.* et les cocultures en présence d'amibes *Willaertia sp.* atteint 2,3 log à J+2 **(****Figure 1****).**

Simultanément, l'observation microscopique des cocultures montrent d'importantes modifications morphologiques affectant exclusivement les amibes des genres *Hartmannella* et *Acanthamoeba* : leurs trophozoites deviennent progressivement arrondis, ratatinés et perdent leur capacité d'adhérence de J2 à J4. Dans ces conditions, le dénombrement exact des amibes pour ces deux genres devient difficile et incertain du fait qu'une majorité des cellules dénombrées est en réalité déjà nécrotique et sur le point de se lyser ; néanmoins le dénombrement montre que la croissance de ces deux genres est ralentie à partir de J+1 avec une nette diminution à J+2 (Tableau 1). Les cocultures en présence de *Willaertia sp.* ne présentent pas cette involution et sont caractérisées, au contraire, par une prolifération des amibes (Tableau 1).

Les résultats présentés dans le Tableau 1 sont obtenus comme suit :

Les différentes espèces amibiennes sont co-cultivées en présence de *L. pneumophila* selon un ratio d'infestation de 50 (*L. pneumophila*/amibe) et les amibes sont dénombrées quotidiennement avec un hématimètre. Les résultats en nombre d'amibes/ml de milieu correspondent à la moyenne de 6 (*Hartmannella*) à 8 (*Acanthamoeba* et *Willaertia*) expérimentations indépendantes. Les différences statistiquement significatives entre le nombre des *Willaertia* et les deux autres espèces amibiennes sont indiquées (*: P<0.05; **: P<0.001).

**Tableau 1. Effet de l'infection bactérienne sur la croissance amibienne**

| | Temps (jour de co-culture) | | | |
|---|---|---|---|---|
| Espèce amibienne | 0 | 1 | 2 | 3 |
| *Acanthamoeba castellanii* | 5,38 × 10⁴ ± 3,86 × 10³ | 1,35 × 10⁵ ± 5,91 × 10⁴ | 1,13 × 10⁵ ± 5,67 × 10⁴ ** | 3,64 × 10⁴ ± 3,05 × 10⁴ ** |
| *Hartmannella vermiformis* | 5,50 × 10⁴ ± 4,60 × 10³ | 1,97 × 10⁵ ± 4,63 × 10⁴ | 2,32 × 10⁵ ± 3,76 × 10⁴ * | 1,26 × 10⁵ ± 2,96 × 10⁴ ** |
| *Willaertia magna* | 5,41 × 10⁴ ± 2,52 × 10³ | 1,77 × 10⁵ ± 3,93 × 10⁴ | 2,92 × 10⁵ ± 5,26 × 10⁴ | 2,42 × 10⁵ ± 4,71 × 10⁴ |

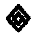 **Absence de cytotoxicité de *L. pneumophila* vis-à-vis des amibes *Willaertia***

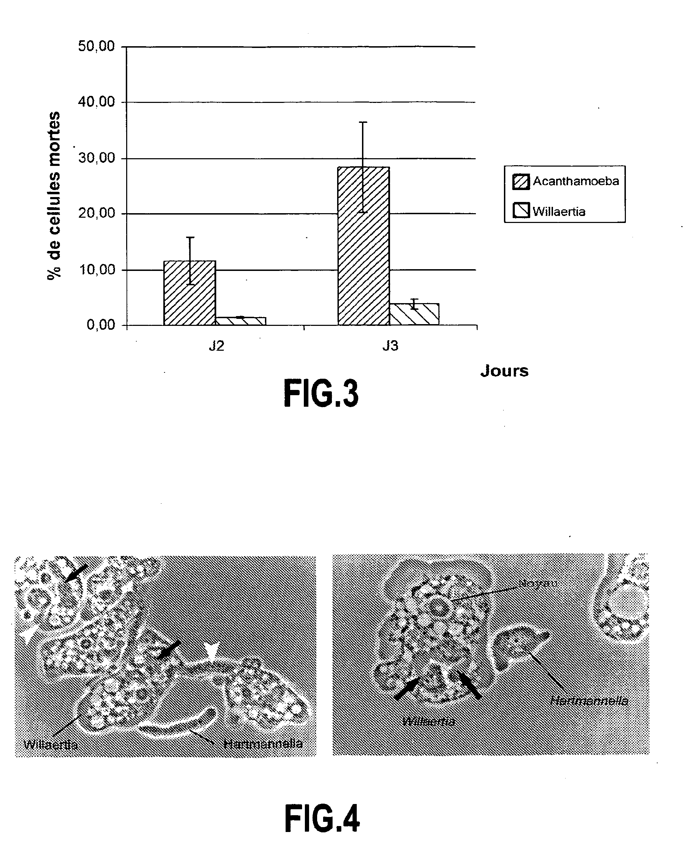

L'effet cytotoxique induit par *L. pneumophila* sur les amibes a été examiné par l'observation en microscopie à contraste de phase des cocultures en microplaques. La Fig. 2 montrent les images obtenues en microscopie à contraste de phase des différentes espèces amibiennes cultivées en l'absence (en haut) et en présence (en bas) de *L. pneumophila* pendant 72H selon un ratio d'infestation de 50. Dans ces conditions, on constate que *L. pneumophila* détruit complètement les monocouches des souches *d'Hartmannella sp.* et *d'Acanthamoeba sp.* au bout de 72 H d'infection avec apparition de cellules détachées et arrondies **(****Figure 2****),** alors que, pour le même ratio d'infestation et dans le même laps de temps, les monocouches de *Willaertia sp.* demeurent intactes et prolifèrent aussi bien que dans le puits témoin dépourvu de légionelles **(****Figure 2****).** Ces observations ont été confirmées par la réalisation d'un test d'exclusion au bleu Trypan sur les cocultures *d'Acanthamoeba* et de *Willaertia*. La **Fig. 3** illustre la cytotoxicité comparée de *L. pneumophila* vis-à-vis de *Acanthamoeba* et de *Willaertia*. Les amibes sont cultivées en présence de *L. pneumophila* et le pourcentage de cellules positives au bleu trypan après 2 et 3 jours de coculture est déterminé microscopiquement. Les données présentées **Fig. 3** correspondent aux résultats obtenus à la suite de 5 essais indépendants.

Les résultats montrent que 28,4 ± 8 % des rares cellules d'*Acanthamoeba sp.* encore présentes au bout de 72 H sont tuées. A l'opposé, l'effet cytopathogène de *L. pneumophila* pour les *Willaertia sp.* est de moins de 4% après le même temps d'infection **(****Figure 3****)**. Donc, morphologiquement, les trophozoites de *Willaertia* en coculture semblent beaucoup mieux résister à l'infection par *L. pneumophila* que ceux d'*Hartmannella* ou d'*Acanthamoeba*.

### 2.2. Cinétique du processus de phagocytose inter-amibienne.

La phagocytose des amibes *Hartmannella* par les amibes du genre *Willaertia* débute dans les minutes qui suivent la mise en présence des deux genres amibiens. Le phénomène est déclenché par les rencontres aléatoires qui se produisent entre les deux genres amibiens ; son évolution dépend donc des proportions respectives des deux genres mis en présence.

Microscopiquement, il est parfaitement possible de suivre in vivo, l'ingestion des *Hartmannella* par les *Willaertia* et il n'est pas rare d'observer une cellule de *Willaertia* renfermant plusieurs trophozoites d'*Hartmannella* à des stades plus ou moins avancés de digestion comme illustré sur la **Figure 4****.** La **Figure 4** qui représentent des vues en microscopie à contraste de phase (x1200) met en évidence la phagocytose des amibes *Hartmannella* par les amibes *Willaertia* observée in vivo. Les flèches noires indiquent la présence de trophozoites d'*Hartmannella* phagocytés à l'intérieur du cytoplasme des amibes *Willaertia.* La pointe blanche indique une amibe *Hartmannella* proie simultanée de deux *Willaertia*.

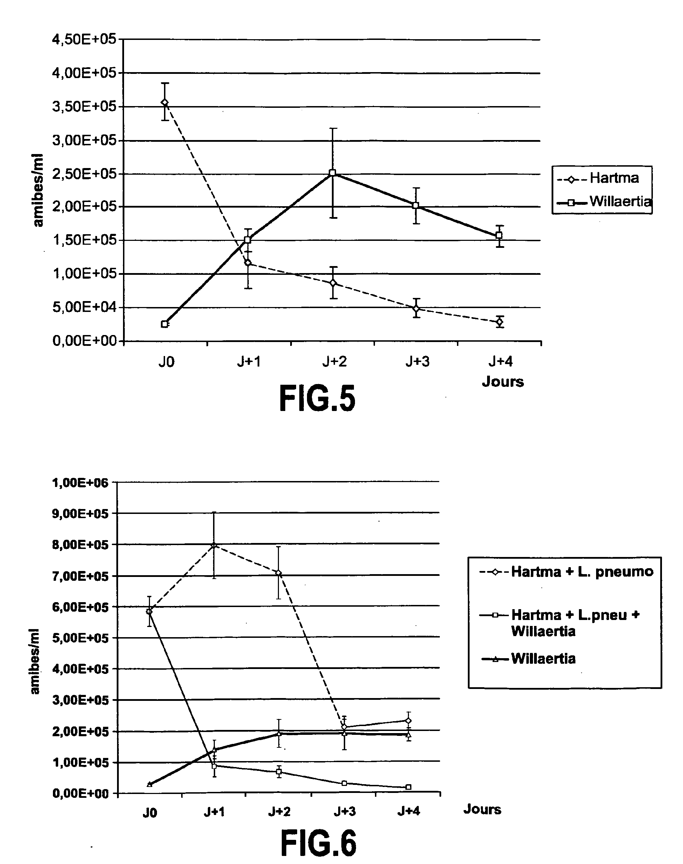

L'étude cinétique du phénomène montre qu'à la suite de ce processus phagocytaire, on assiste à une décroissance très rapide de la population des *Hartmannella* qui chute à 14% de sa valeur initiale en 3 jours, alors que parallèlement, la population des *Willaertia* augmente d'1 log en deux jours. Il s'ensuit une inversion totale du rapport H/W qui passe de 14,4 à 0,24 de J0 à J+3 (**Figure 5** qui montre l'évolution respective des populations d'*Hartmannella* (H) et de *Willaertia* (W) mélangées en culture axénique selon un ratio H/W de 15).

### 2.3. Résultats des cocultures tripartites (bi-amibiennes) de L. pneumophila.

L'introduction de l'amibe *Willaertia* dans les cocultures tripartites à partir de J0, c'est-à-dire 24 H après l'infestation du premier hôte amibien *Hartmannella* par *L. pneumophila,* s'accompagne de deux phénomènes concomitants et confirment l'effet observé précédemment lors de la réalisation des cocultures mono-amibiennes :
1. La **Figure 6** montre les croissances respectives des espèces amibiennes en présence de *L, pneumophila* selon les conditions de coculture précédemment décrites dans la section matériel et méthode, à savoir : Les amibes du genre *Hartmannella* ont été préalablement infectées à J-1 pendant 24 H par *L. pneumophila* selon un ratio d'infestation de 20. A J0, après élimination des légionelles extracellulaires par un traitement à la Gentamycine (1H) et un lavage soigneux, les amibes *Hartmannella* (H) pré-infectées sont remises en suspension dans leur volume initial de milieu SCGYEM et reçoivent des amibes du genre *Willaertia* (W), dans la série « essai », selon un ratio H/W = 20 (coculture tripartite). La série « témoin » évolue en l'absence de *Willaertia* et correspond à une coculture mono-amibienne. Les populations amibiennes sont dénombrées chaque jour dans chacune des séries « témoin » et « essai ». On assiste, de manière logique, à une diminution plus rapide des amibes *Hartmannella* dans la série « essai », atteignant 86% au cours des premières 24 H, à la suite du déclenchement du processus phagocytaire inter-amibienne, que dans la série " témoin " où la disparition des *Hartmannella* est due à la seule lyse nécrotique induite par *L. pneumophila* **(****Figure 6****)**. Parallèlement, on constate une augmentation régulière des *Willaertia* qui voient leur nombre multiplié par 6,5 sur la durée de l'expérimentation et comme précédemment le rapport H/W devient complètement inversé passant de 19,8 à 0, 08. Comme on l'a déjà constaté lors des cocultures mono-amibiennes, la présence des légionelles ne semble donc pas affecter l'apparence morphologique et le développement des *Willaertia*.

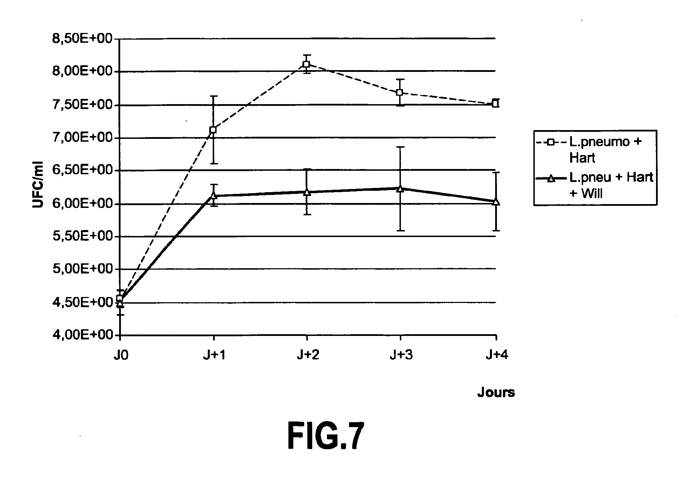

2. La **Figure 7** montre la croissance comparée de *L. pneumophila* en coculture mono-amibienne avec *Hartmannella* seule et en coculture tripartite en présence d'*Hartmannella* et de *Willaertia* rajouté à partir de J0. Les modalités opératoires sont celles indiquées précédemment pour la **Figure 6**. On observe un arrêt du développement de *L. pneumophila* par rapport à celui que l'on obtient dans les cocultures " témoins " en présence des amibes *Hartmannella* seules **(****Figure 7****)**. L'inhibition du développement de *L. pneumophila* à la suite de l'introduction de *Willaertia* atteint 2 log au bout de 48 H de coculture tripartite. Visiblement, le processus de phagocytose des *Hartmannella* par les *Willaertia* ne permet donc pas de relayer et d'amplifier la réplication de la bactérie au sein du nouvel hôte.

En conclusion, la tendance observée lors de la réalisation des cocultures mono-amibiennes de *L. pneumophila* avec *Willaertia* est pleinement confirmée par les résultats des cocultures tripartites. On constate que la phagocytose par *Willaertia* du premier hôte amibien, préalablement infesté pendant 24 H, a pour effet de bloquer totalement le développement des légionelles par rapport à l'évolution constatée dans les cocultures témoins d'*Hartmannella* ne comportant pas de *Willaertia*. Visiblement, l'augmentation de la population des *Willaertia* et le processus phagocytaire qui l'accompagne ne permettent pas la transmission de l'infestation du premier hôte cellulaire au deuxième hôte potentiel. La stabilité relative du taux des légionelles à des valeurs proches de celles du départ peut être maintenue par des *Hartmannella* non encore phagocytées. L'ensemble de ces résultats montre une absence de développement de *L. pneumophila* en présence des amibes du genre *Willaertia.*

Des résultats conformes à l'ensemble des résultats présentés ci-dessus, obtenus avec la souche N° PTA-7824, sont également obtenus avec la souche N° PTA-7825.

## Revendications

1. Procédé de lutte biologique contre la prolifération des *Legionella pneumophila,* à l'exception des méthodes de traitement appliquées au corps humain ou animal, **caractérisé en ce qu'**il utilise des protozoaires amibiens de l'espèce *Willaertia magna,* correspondant à la souche déposée sous le numéro PTA-7824 à l'ATCC ou à la souche déposée sous le numéro PTA-7825 à l'ATCC.

2. Procédé selon la revendication 1 **caractérisé en ce qu'**il met en oeuvre le traitement d'un flux liquide ou gazeux avec les protozoaires amibiens.

3. Procédé selon la revendication 1 ou 2 **caractérisé en ce qu'**il est mis en oeuvre pour la désinfection des réseaux de distribution d'eaux sanitaires ou d'eaux industrielles, des circuits de refroidissements et des tours aéro-réfrigérantes des installations industrielles, ou des réseaux de climatisations.

4. Procédé selon la revendication 1 ou 2 **caractérisé en ce qu'**il est mis en oeuvre pour lutter contre la prolifération de *Legionella pneumophila* au sein des biofilms dans les canalisations d'eaux.

5. Agent désinfectant contenant des protozoaires amibiens de l'espèce *Wi*/*laertia magna,* correspondant à la souche déposée sous le numéro PTA-7824 à l'ATCC ou à la souche déposée sous le numéro PTA-7825 à l'ATCC.

6. Agent désinfectant selon la revendication 5 **caractérisé en ce qu'**il se présente sous la forme d'une solution ou d'une suspension aqueuse.

7. Protozoaires amibiens appartenant à l'espèce *Wi*/*laertia magna correspondant à la souche* déposée sous le numéro PTA-7824 à l'ATCC ou à la souche déposée sous le numéro PTA-7825 à l'ATCC.

## Claims

1. Method for biologically combating the proliferation of *Legionella pneumophila,* with the exception of the treatment methods applied to the human or animal body, **characterised in that** it uses amoebic protozoa of the species *Wlillaertia magna,* corresponding to the strain deposited with the ATCC under number PTA-7824 or the strain deposited with the ATCC under number PTA-7825.

2. Method according to claim 1 **characterised in that** it is applied to the treatment of a liquid or gas flux using amoebic protozoa.

3. Method according to claim 1 or 2 **characterised in that** it is applied for the disinfection of drinking or industrial water distribution networks, cooling circuits and evaporative cooling towers in industrial plants or air conditioning units.

4. Method according to claim 1 or 2 **characterised in that** it is applied to combat the proliferation of *L. pneumophila* in water pipes using biofilms.

5. Disinfecting agent containing amoebic protozoa of the species *Willaertia magna,* corresponding to the strain deposited under number PTA-7824 with the ATCC or the strain deposited under number PTA-7825 with the ATCC.

6. Disinfecting agent according to claim 5 **characterised in that** it is in the form of a solution or of an aqueous suspension.

7. Amoebic protozoa belonging to the species *Willaertia magna* corresponding to the strain deposited with the ATCC under number PTA-7824 or the strain deposited with the ATCC under number PTA-7825.

## Patentansprüche

1. Verfahren zur biologischen Bekämpfung der Vermehrung von Legionella pneumophila, mit Ausnahme der auf den Körper von Mensch oder Tier angewandten Behandlungsverfahren, **dadurch gekennzeichnet, daß** es Amöben-Protozoen der Gattung Willaertia magna verwendet, die dem beim ATCC unter der Nummer PTA-7824 eingetragenen Stamm oder dem beim ATCC unter der Nummer PTA-7825 eingetragenen Stamm entsprechen.

2. Verfahren nach Anspruch 1, **dadurch gekennzeichnet, daß** es die Behandlung eines flüssigen oder gasförmigen Stroms mit den Amöben-Protozoen umfaßt.

3. Verfahren nach Anspruch 1 oder 2, **dadurch gekennzeichnet, daß** es zur Desinfektion von Brauchwasser- oder Betriebswasserversorgungsnetzen, von Kühlkreisläufen und Luftkühltürmen von Industrieanlagen, oder von Klimatisierungsnetzen eingesetzt wird.

4. Verfahren nach Anspruch 1 oder 2, **dadurch gekennzeichnet, daß** es zur Bekämpfung der Vermehrung von Legionella pneumophila innerhalb der Biofilme in Wasserrohrleitungen eingesetzt wird.

5. Desinfektionsmittel, das Amöben-Protozoen der Gattung Willaertia magna enthält, die dem beim ATCC unter der Nummer PTA-7824 eingetragenen Stamm oder dem beim ATCC unter der Nummer PTA-7825 eingetragenen Stamm entsprechen.

6. Desinfektionsmittel nach Anspruch 5, **dadurch gekennzeichnet, daß** es in Form einer wäßrigen Lösung oder Suspension vorliegt.

7. Amöben-Protozoen, welche zur Gattung Willaertia magna gehören, die dem beim ATCC unter der Nummer PTA-7824 eingetragenen Stamm oder dem beim ATCC unter der Nummer PTA-7825 eingetragenen Stamm entsprechen.
